Europäisches Patentamt

European Patent Office

Office européen des brevets

(19)

(11) **EP 1 014 239 B1**

(12) **EUROPÄISCHE PATENTSCHRIFT**

(45) Veröffentlichungstag und Bekanntmachung des Hinweises auf die Patenterteilung:
**04.06.2003   Patentblatt 2003/23**

(51) Int Cl.$^7$: **G05B 13/04**, B21B 37/00

(21) Anmeldenummer: **98123860.3**

(22) Anmeldetag: **16.12.1998**

(54) **Verfahren zur Berechnung eines Stichplanes**

Method for calculating a reduction plan

Procédé de calcul d' un patron de réduction

(84) Benannte Vertragsstaaten:
**AT BE DE FI FR GB IT NL SE**

(43) Veröffentlichungstag der Anmeldung:
**28.06.2000   Patentblatt 2000/26**

(73) Patentinhaber: **VOEST-ALPINE INDUSTRIEANLAGENBAU GESELLSCHAFT m.b.H.**
**4031 Linz (AT)**

(72) Erfinder: **Auzinger, Dietmar Dipl.-Ing. Dr.**
**4203 Altenberg (AT)**

(74) Vertreter: **VA TECH Patente GmbH & Co**
**Penzinger Strasse 76**
**1141 Wien (AT)**

(56) Entgegenhaltungen:
**DE-A- 4 141 230          US-A- 5 375 448**

- **NOGUCHI Y ET AL: "MULTIVARIABLE CONTROOL OF INTERSTAND TENSION AND EXIT HEIGHT OF THEMATERIAL FOR BAR AND WIRE ROD ROLLING" ROBOTICS, VISION AND SENSORS, SIGNAL PROCESSING AND CONTROL, MAUI, NOE. 15 - 19, 1993, Bd. 3, 15. November 1993 (1993-11-15), Seiten 2299-2304, XP000437592 INSTITUTE OF ELECTRICAL AND ELECTRONICS ENGINEERS**
- **L.ADLER ET AL: "ECONOMIC CONTROL OF KRAFT MILL OPERATION" PROCEEDINGS OF A SYMPOSIUM ON MODELLING AND CONTROL OF CRAFT PRODUCTION SYSTEMS FOR PULP PRODUCTION , 8. Oktober 1975 (1975-10-08), Seiten 245-273, XP002110324 USA**
- **DUYSTERS S ET AL: "DYNAMIC MODELLING OF THE FINISHING TRAIN OF HOOGOVENS' HOT STRIP MILL AND OPTIMIZATION OF THICKNESS CONTROL PARAMETERS" JOURNAL A, Bd. 31, Nr. 4, 1. Dezember 1990 (1990-12-01), Seiten 8-15, XP000178686 ISSN: 0771-1107**
- **K.SCHITTKOWSKI: "SOLVING NONLINEAR PROGRAMMING PROBLEMS WITH VERY MANY CONSTAINTS" OPTIMIZATION 1992, Bd. 25, 1992, Seiten 179-196, XP002110332 UK**

## Beschreibung

Die Erfindung betrifft ein Verfahren zur Berechnung eines Stichplanes für eine Walzstraße mit Hilfe mathematischer Modelle eines Walzprozesses.

Bekannte Verfahren erlauben es, zu einer vorgegebenen Walzstrategie, die Beschränkungen an den Stichplan, wie Stichverteilung und festgelegte Stichabnahme, beinhaltet, einen geeigneten Stichplan für ein vorgegebenes Eingangsmaterial, Ausgangsmaterial und für eine vorgegebene Walzstraße zu berechnen. Die Optimierung beschränkt sich auf das Auffinden eines gültigen Stichplans unter den durch die Walzstrategie bereits vorgegebenen Beschränkungen.

Im Artikel "Pass schedule optimisation in cold rolling mills", H H Neumann und B Richter, Steel World, May 1994, Brunel International, United Kingdom, Seiten 64 bis 66, wird ein Verfahren zur Optimierung von Stichplänen unter Verwendung von Modellen gezeigt. Es wird hierbei zuerst die gesamte Stichabnahme berechnet und erst anschließend überprüft, ob vorgegebene Grenzwerte überschritten worden sind. Gegebenenfalls werden die Eingangsgrößen verändert und es wird eine neue Berechnung des Stichplans durchgeführt. Die Optimierung besteht hier im mehrmaligen Durchführen einer Stichplanberechnung unter Veränderung der Parameter.

Im Artikel "Entwicklungstrends beim Warmflachwalzen und Möglichkeiten zur Stichplanoptimierung", Harald Wehage, Ulrich Skoda-Dopp, Uwe Quitmann und Wolfgang Sauer, Stahl und Eisen 118 (1998), Nr. 10, 14. Oktober 1998, Seiten 37 bis 44, werden Stichplanprogramme vorgestellt, die aufgrund von mathematischen und physikalischen Modellen unter Berücksichtigung empirischer Größen erstellt werden, Mit Hilfe dieser Stichplanprogramme wird eine Stichplansimulation durchgeführt, die für einen festgelegten Stichplan die Produkte simulationstechnisch herstellen kann. Eine Optimierung des Stichplans kann auch hier nur durch Wiederholung der Berechnung mit geändertem Parametern des Stichplanprogramms erfolgen.

Eine Aufgabe der vorliegenden Erfindung besteht nun darin, ein Verfahren zu entwikkeln, das es erlaubt, den optimierten Stichplan selbst ohne Vorgabe einer Walzstrategie zu berechnen.

Die Erfindung ist dadurch gekennzeichnet, dass eine Zielfunktion gebildet wird, die unter Einbeziehung zumindest eines mathematischen Modells als Nebenbedingung einer mathematischen Optimierung, wie z. B. einer Extremwertbildung, unterworfen wird, und die auf diese Art bestimmten Funktionswerte der Zielfunktion zur Erstellung eines Stichplans verwendet werden.

Neu an dieser Erfindung ist, dass nicht nur ein beliebiger gültiger, sondern auch ein mathematisch optimierter Stichplan gefunden werden kann, wobei eine Optimierung nach verschiedenen Kriterien möglich ist. Die durch die Optimierung bestimmten Funktionswerte der Zielfunktion können beispielsweise direkt als Parameter des Stichplans verwendet werden.

Eine mögliche Ausgestaltung der Erfindung besteht darin, dass die Zielfunktion eine Funktion von Zustandsvariablen des Walzguts, wie Geschwindigkeit v, Dicke h, Temperatur T, relatives Profil r, und/oder von Kontrollvariablen, wie Umfangsgeschwindigkeit $V_R$, Walzkraft F, Biegekraft $F_B$, ist. Insbesondere kann die Zielfunktion die Auslaufgeschwindigkeit des Walzguts, beispielsweise eines Bandes, die Walzkraft oder die Bandplanheit sein, sodass beispielsweise ein Stichplan mit besonders hoher Auslaufgeschwindigkeit errechnet wird.

Durch das Merkmal, dass zumindest eine an den Stichplan in Form eines Grenzwerts gestellte Bedingung bei der Optimierung als Nebenbedingung berücksichtigt wird, werden auf einfache Weise anlagentechnische oder technologische Grenzwerte in die Optimierung einbezogen. Die Nebenbedingung wird mathematisch als Ungleichung dargestellt.

Weiters kann vorgesehen werden, dass zumindest eine Bedingung, die einen fixierten Wert für eine Kontroll- oder Zustandsvariable angibt, bei der Optimierung als Nebenbedingung berücksichtigt wird. Dadurch können festgelegte Werte, z.B. die Eintrittstemperatur des Walzguts bei Eintritt in die Walzstraße, in die Optimierung eingebunden werden.

Weiters ist vorgesehen, dass als Optimierungsalgorithmus ein Verfahren zur sequentiellen quadratischen Optimierung, z.B. das Verfahren nach Schittkowski, verwendet wird. Dieses Optimierungsverfahren (siehe z.B. Schittkowski Klaus: "On the Convergence of a Sequential Quadratic Programming Method with Augmented Lagrangian Line Search Function", Math. Operationsforschung und Statistik, Ser. Optimization, Vol.14(1983) No.2, Seiten 197-216) hat den Vorteil, dass es gute Konvergenzeigenschaften besitzt. Außerdem findet es sehr rasch eine zulässige Lösung, sodass auch bei vorzeitigem Abbruch des Optimierungsverfahrens bereits eine gute Näherung zur Verfügung steht. Für die Lösung der aus dem Verfahren nach Schittkowski bestimmten quadratischen Hilfsprobleme kann die Methode von Gill und Murray verwendet werden (Gill P., Murray W.: "Numerically stable methods for Quadratic Programming", Mathematical Programming 14 (1978), Seiten 349-372).

Eine Ausführung der Erfindung besteht darin, dass im Falle der Unlösbarkeit der mathematischen Optimierung unter vorgegebenen Nebenbedingungen die Lösung mit der kleinsten Verletzung der Nebenbedingungen, insbesondere der grenzwertbezogenen Nebenbedingungen, berechnet wird. Dadurch kann erreicht werden, dass ein optimierter Stichplan ermittelt wird, der nur sehr wenig von den vorgegebenen Bedingungen abweicht.

Dabei kann vorgesehen werden, dass eine Prioritätenreihenfolge der aufzugebenden Nebenbedingungen und/oder alternativen Nebenbedingungen vorgegeben wird.

Das erfindungsgemäße Verfahren kann einerseits dafür eingesetzt werden, dass die Optimierung off-line zur Berechnung von Stichplänen für zeitlich nachfolgende Walzprozesse durchgeführt wird. Die berechneten Stichpläne können beispielsweise zur Auslegung von Anlagen verwendet werden.

Andererseits kann das erfindungsgemäße Verfahren auch dafür eingesetzt werden, dass die Optimierung on-line unmittelbar vor und/oder während des Walzprozesses durchgeführt und die Ergebnisse der Optimierung zur Steuerung des Walzprozesses verwendet werden. Dabei kann unmittelbar vor dem Walzprozess unter Verwendung aktueller Messwerte der Walzstraße die Optimierung zur Berechnung von Setzwerten zur Steuerung des Walzprozesses verwendet werden sowie der Walzprozess selbst durch eine während des Walzens durchgeführte Optimierung gesteuert werden.

Das erfindungsgemäße Verfahren kann besonders effizient eingesetzt werden, wenn als Startlösung für die Optimierung ein Stichplan mit ähnlicher Charakteristik verwendet wird. Beispielsweise können dabei bereits mittels des erfindungsgemäßen Verfahrens berechnete Stichpläne verwendet werden.

Die Erfindung soll anhand einer Warmbreitbandstraße beispielhaft erläutert werden. Die Warmbreitbandstraße besitzt eine Anzahl von M Walzgerüsten. Das in die Walzstraße eintretende Walzgut weist eine Temperatur $T^B$ und eine Dicke $h^B$ auf. Das Walzgut soll nach dem Walzvorgang eine Dicke $h^E$, eine Temperatur $T^E$ und ein Profil $r^E$ aufweisen.

Das Walzgut kann zu jedem Zeitpunkt durch die Zustandsvariablen

- Geschwindigkeit v

- Dicke h

- Temperatur T

- relatives Profil r

beschrieben werden. Der Arbeitsablauf wird in 2M-1 Stufen unterteilt und die einzelnen Stufen mit der Laufvariablen k gekennzeichnet. In jeder Stufe k wird der Zustand des Walzguts unter dem Einfluss von Kontrollvariablen, wie etwa der Walzkraft, vom Zustand k auf den Zustand k+1 geändert. Die Zustandsvariablen, die durch die Laufvariable k gekennzeichnet sind, beschreiben die Eintrittsparameter bei Eintritt in die Stufe k. Die Zustandsvariablen, die durch die Laufvariable (k+1) gekennzeichnet sind, beschreiben die Austrittsparameter bei Austritt aus der Stufe k und gleichzeitig die Eintrittsparameter bei Eintritt in die Stufe (k+1). Die Zustandsvariablen, die durch die Laufvariable k=(2M-1) gekennzeichnet sind, stellen die Austrittsparameter bei Austritt aus der letzten Stufe dar, wenn das letzte Walzgerüst als letzte Stufe betrachtet wird. Der Übergang vom Zustand k auf den Zustand k+1 wird durch ein Modell in Form von Gleichungen beschrieben.

Die Änderung der Zustandsvariablen v, h, T, r durch die Einwirkung der Walzen erfolgt in den geraden Stufen 0, 2, ..., 2(M-1), die Änderung der Zustandsvariablen v, h, T, r zwischen den Walzgerüsten erfolgt in den ungeraden Stufen 1, 3, ..., 2M-3. Die geraden Stufen k = 2i (i=0, 1, ..., M-1) können alle vom gleichen Walzmodell beschrieben werden, wobei zu jeder Stufe k ein eigener Satz von Parametern $p^k$ gehört, der die Eigenschaften des Walzgerüstes, wie Schliff oder Durchmesser der Walzen, enthält. Die ungeraden Stufen mit k = 2i+1 (i=0, 1, ..., M-2) können alle vom gleichen Kühlmodell beschrieben werden, wobei zu jeder Stufe k ein eigener Satz von Parametern $p^k$ gehört, der die Eigenschaften der jeweiligen Kühlvorrichtung enthält, wie Länge der Kühlstrecke oder Kühlmedium.

Das Walzmodell hängt neben den Zustandsvariablen v, h, T, r auch von den Kontrollvariablen (die die Stellgrößen repräsentieren)

- Umfangsgeschwindigkeit $V_R$ der Arbeitswalzen

- Walzkraft F

- Biegekraft $F_B$

der jeweiligen Stufe ab. Das Walzmodell enthält die folgenden Prozessmodelle:

- Walzkraftmodell:

$$S(h^k, h^{k+1}, r^k, v_R^k, F^k, F_B^k, p^k) - F^k = 0 \qquad (1)$$

- Geschwindigkeitsmodell 1:

$$V_1(h^k, h^{k+1}, r^k, v_R^k, F^k, F_B^k, p^k) - v^k = 0 \qquad (2)$$

- Geschwindigkeitsmodell 2:

$$V_2(h^k, h^{k+1}, r^k, v_R^k, F^k, F_B^k, p^k) - v^{k+1} = 0 \qquad (3)$$

- Temperaturmodell 1:

$$T_1(h^k, h^{k+1}, r^k, v_R^k, F^k, F_B^k, p^k) - T^{k+1} = 0 \qquad (4)$$

- Profilmodell:

$$Pr(h^k, h^{k+1}, r^k, v_R^k, F^k, F_B^k, p^k) = 0 \qquad (5)$$

Das Walzkraftmodell und die Geschwindigkeitsmodelle (siehe z.B. für beide Modelle R.B. Sims: "The calculation of roll force and torque in hot rolling mills", Proc. Inst. Mech. Eng. (1954), Seiten 191-200) enthalten die zugehörigen Materialgesetze des Walzguts (siehe z.B. D. Auzinger, M. Pfaffermayr, R. Pichler, B. Schlegl: "Neue Entwicklungen bei Prozeßmodellen für Warmbreitbandstraßen", Stahl und Eisen 116 (1996) Nr. 7, Seiten 59-65). Das Temperaturmodell 1 beschreibt die Temperaturänderung in der Verformungszone (siehe z.B. Weber Karl-Heinz: "Mathematische Modellierung des Temperaturverlaufs beim Warmwalzen von Grobblech und Band", Neue Hütte, 18.Jg., Heft 5, Mai 1973. S.285-295). Das Profilmodell beschreibt das Walzspaltprofil unter Verwendung eines Biegemodells (siehe z.B. B. Berger, Dissertation "Die elastische Verformung der Walzen von Quarto-Walzgerüsten und die Beeinflussung der Walzspaltform durch Walzenbiegeeinrichtungen", TU Clausthal, 1975) für Arbeits- und Stützwalzen und unter Berücksichtigung der Arbeitswalzenbiegung.

Die Variablen des Modells müssen zusätzlich noch Bedingungen (Einhalten von Grenzwerten) erfüllen, wie:

- $$v_R^k - v_{min}(p^k) \geq 0 \qquad (6)$$

Die Umfangsgeschwindigkeit der Arbeitswalzen des Walzgerüsts k muss größer als die minimal zulässige Umfangsgeschwindigkeit der Arbeitswalzen des Walzgerüsts k sein.

- $$v_{max}(p^k) - v_R^k \geq 0 \qquad (7)$$

Die Umfangsgeschwindigkeit der Arbeitswalzen des Walzgerüsts k muss kleiner als die maximal zulässige Umfangsgeschwindigkeit der Arbeitswalzen des Walzgerüsts k sein.

- $$F^k - F_{min}(p^k) \geq 0 \qquad (8)$$

Die Walzkraft am Walzgerüst k muss größer als die minimal zulässige Walzkraft am Walzgerüst k sein.

- $$F_{max}(p^k) - F^k \geq 0 \qquad (9)$$

Die Walzkraft am Walzgerüst k muss kleiner als die maximal zulässige Walzkraft am Walzgerüst k sein.

$$F_B^k - F_{Bmin}(p^k) \geq 0 \tag{10}$$

Die Biegekraft am Walzgerüst k muss größer als die minimal zulässige Biegekraft am Walzgerüst k sein.

$$F_{Bmax}(p^k) - F_B^K \geq 0 \tag{11}$$

Die Biegekraft am Walzgerüst k muss kleiner als die maximal zulässige Biegekraft am Walzgerüst k sein.

$$h^k - h^{k+1} - dh_{min}(p^k) \geq 0 \tag{12}$$

Die Stichabnahme am Walzgerüst k muss größer sein als ein vorgegebener Wert $dh_{min}$.

Weiters können eine Beschränkung der Antriebsmomente der Arbeitswalzen in Abhängigkeit von der Stichdauer und der Antriebsdrehzahl vorgesehen sowie eine Anstichbedingung (Greifwinkel) vorgegeben werden. Zur Gewährleistung des geforderten Endprofils und der Planheit des Bandes sind Bedingungen für die Profile in den einzelnen Bearbeitungsstufen zu berücksichtigen, etwa die Bedingungen von Shohet/Townsend (Shohet, K.N.; Townsend N.A., Journal of the Iron and Steel Institute (1971) Nr.10, Seiten 769-775).

Im Kühlmodell wird nur die Temperatur verändert, was durch ein Temperaturmodell

$$T_2(v^k, h^k, T^k, W^k, p^k) - T^{k+1} = 0 \tag{13}$$

für das Walzgut in Strahlungszonen und mit Wasserkühlung berücksichtigt wird (siehe ebenfalls Weber Karl-Heinz: "Mathematische Modellierung des Temperaturverlaufs beim Warmwalzen von Grobblech und Band", Neue Hütte, 18.Jg., Heft 5, Mai 1973. S.285-295). Als Kontrollvariable wird hier beispielsweise die spezifische Kühlmittelmenge $W^k$ (Wassermenge pro Zeit und Fläche) verwendet. Es kann auch statt dessen oder zusätzlich eine Luftkühlung vorgesehen sein.

Die Modelle können nur für sinnvolle Kombinationen von Zustands- und Kontrollvariablen ausgewertet werden:

$$h^k \geq h^{k+1} \geq 0 \tag{14}$$

$$T^k \geq 0 \tag{15}$$

$$F^k \geq 0 \tag{16}$$

$$F_B^k \geq 0 \tag{17}$$

$$V_R^K \geq 0 \tag{18}$$

Die Güte der einzelnen Kombinationen wird durch einen Beitrag zur Zielfunktion bewertet. Ziel des Verfahrens ist es, einen Stichplan zu finden, der die Randbedingungen

$$h^0 = h^B \tag{19}$$

$$T^0 = T^B \tag{20}$$

$$h^{2M-1} = h^E \tag{21}$$

• 
$$T^{2M-1} = T^E \tag{22}$$

erfüllt, also aus der vorgegebenen Anfangstemperatur und -dicke das Erreichen der vorgegebenen Endtemperatur und -dicke gewährleistet. Dazu wird eine nach den Variablen stetig differenzierbare Zielfunktion ermittelt mit der allgemeinen Form

$$f(x,y) := \sum_{k=0}^{2M-2} f^k\left(x^k, x^{k+1}, y^k\right). \tag{23}$$

x bezeichnet die Zustandsvariablen, wie $v$, $h$, $T$, $r$, und $y$ die Kontrollvariablen, wie $V_R$, $F$, $F_B$. Für jede Stufe $k$ wird eine eigener Beitrag $f^k$ gebildet, wobei alle Beiträge zur Zielfunktion $f$ addiert werden.

Die Optimierungsaufgabe besteht darin, die Zielfunktion $f(x, y)$ zu minimieren unter den Nebenbedingungen

$c^k(x^k, x^{k+1}, y^k) = 0$, siehe Gleichungen (1)-(5) und (13)

$c^k(x^k, x^{k+1}, y^k) \geq 0$, siehe Gleichungen (6)-(12) und (14)-(18)

$x^k = v^k$, siehe Gleichungen (19)-(22), wobei $v$ für die Werte der fixierten Zustandsvariablen $x$ steht,

$y^k = w^k$, wobei $w^k$ für die Werte der fixierten Kontrollvariablen $y$ steht. So kann z.B. die Kühlmittelmenge $w^k$ für bestimmte Stufen $k$ festgelegt werden.

Je nach Definition der Zielfunktion kann ein Stichplan für einen Walzvorgang mit maximaler Auslaufgeschwindigkeit oder mit maximal gewichtetem Abstand von den Rändern des Zulässigkeitsbereiches ermittelt werden.

Die Zielfunktion (23) für maximale Auslaufgeschwindigkeit setzt sich aus folgenden Beiträgen zusammen:

$f_k(x^k, x^{k+1}, y^k) = 0$       für $k = 0, \dots 2M-3$
$f_{2M-2}(x^{2M-2}, x^{2M-1}, y^{2M-2}) = -v^{2M-1}$

Die Zielfunktion (23) für eine möglichst große Walzkraftreserve setzt sich aus folgenden Beiträgen zusammen:

$f_k(x^k, x^{k+1}, y^k) = 0$       für $k$ ungerade

$f_k(x^k, x^{k+1}, y^k) = -(F_{max}(p^k) - F^k)^2$       für $k$ gerade

Die durch die Optimierung bestimmten Funktionswerte $x^k$, $x^{k+1}$, $y^k$ stellen den optimierten Stichplan dar. Kann aufgrund der vorgegebenen Nebenbedingungen des Optimierungsproblems bei einmaliger Durchführung des Optimierungsverfahrens keine Lösung gefunden werden, wird als nächster Schritt zumindest eine Nebenbedingung geändert, etwa ein Grenzwert oder ein fix vorgegebener Wert für eine Kontrollvariable, und mit dieser veränderten Nebenbedingung erneut eine Optimierung durchgeführt. Dabei kann vorgegeben werden, welche Nebenbedingung zuerst und in welchem Ausmaß diese geändert werden soll. Wenn erneut keine gültige Lösung gefunden werden kann, wird das Optimierungsverfahren unter Veränderung zumindest einer Nebenbedingung wiederholt.

Das erfindungsgemäße Verfahren wird zweckmäßigerweise auf einem Rechner implementiert, der eine Datenbank mit bereits berechneten Stichplänen aufweist.

Das erfindungsgemäße Verfahren kann in allen Walzstraßen, so beispielsweise in Warm- oder Kaltwalzstraßen, in Steckel mills, Drahtwalzstraßen, Grobblechstraßen und Profilwalzwerken eingesetzt werden.

**Patentansprüche**

**1.** Verfahren zur Berechnung eines Stichplanes für eine Walzstraße mit Hilfe mathematischer Modelle eines Walzprozesses, **dadurch gekennzeichnet, dass** eine Zielfunktion gebildet wird, die unter Einbeziehung zumindest eines mathematischen Modells als Nebenbedingung einer mathematischen Optimierung, wie z. B. einer Extremwertbildung, unterworfen wird, und die auf diese Art bestimmten Funktionswerte der Zielfunktion zur Erstellung eines Stichplans verwendet werden.

**2.** Verfahren nach Anspruch 1, **dadurch gekennzeichnet, dass** die Zielfunktion eine Funktion von Zustandsvariablen des Walzguts, wie Geschwindigkeit v, Dicke h, Temperatur T, relatives Profil r, und/oder von Kontrollvariablen, wie Umfangsgeschwindigkeit $V_R$, Walzkraft F, Biegekraft $F_B$, ist.

**3.** Verfahren nach einem der Ansprüche 1 bis 2, **dadurch gekennzeichnet, dass** zumindest eine an den Stichplan in Form eines Grenzwerts gestellte Bedingung bei der Optimierung als Nebenbedingung berücksichtigt wird.

**4.** Verfahren nach einem der Ansprüche 1 bis 3, **dadurch gekennzeichnet, dass** zumindest eine Bedingung, die einen fixierten Wert für eine Kontroll- oder Zustandsvariable angibt, bei der Optimierung als Nebenbedingung berücksichtigt wird.

**5.** Verfahren nach einem der Ansprüche 1 bis 4, **dadurch gekennzeichnet, dass** als Optimierungsalgorithmus ein Verfahren zur sequentiellen quadratischen Optimierung, z.B. das Verfahren nach Schittkowski, verwendet wird.

**6.** Verfahren nach einem der Ansprüche 1 bis 5, **dadurch gekennzeichnet, dass** im Falle der Unlösbarkeit der mathematischen Optimierung unter vorgegebenen Nebenbedingungen die Lösung mit der kleinsten Verletzung der Nebenbedingungen, insbesondere der grenzwertbezogenen Nebenbedingungen, berechnet wird.

**7.** Verfahren nach Anspruch 6, **dadurch gekennzeichnet, dass** eine Prioritätenreihenfolge der aufzugebenden Nebenbedingungen und/oder alternativen Nebenbedingungen vorgegeben wird.

**8.** Verfahren nach einem der Ansprüche 1 bis 7, **dadurch gekennzeichnet, dass** die Optimierung off-line zur Berechnung von Stichplänen für zeitlich nachfolgende Walzprozesse durchgeführt wird.

**9.** Verfahren nach einem der Ansprüche 1 bis 7, **dadurch gekennzeichnet, dass** die Optimierung on-line unmittelbar vor und/oder während des Walzprozesses durchgeführt und die Ergebnisse der Optimierung zur Steuerung des Walzprozesses verwendet werden.

**10.** Verfahren nach einem der Ansprüche 1 bis 9, **dadurch gekennzeichnet, dass** als Startlösung für die Optimierung ein Stichplan mit ähnlicher Charakteristik verwendet wird.

**Claims**

**1.** Method of computing a pass schedule for a rolling mill with the aid of mathematical models of a rolling process, **characterised in that** a target function is set up, which is run as an auxiliary condition of a mathematical optimisation, such as generating an extreme value for example, incorporating at least one mathematical model, and the function values of the target function determined in this manner are used to set up a pass schedule.

**2.** Method as claimed in claim 1, **characterised in that** the target function is a function dependent on state variables of the stock, such as velocity v, thickness h, temperature T, relative profile r, and/or control variables, such as peripheral velocity $V_R$, roll force F, bending force $F_B$.

**3.** Method as claimed in one of claims 1 to 2, **characterised in that** at least one condition placed on the pass schedule in the form of a threshold value is taken into account as an auxiliary condition during the optimisation.

**4.** Method as claimed in one of claims 1 to 3, **characterised in that** at least one condition specifying a fixed value for a control or state variable is taken into account as an auxiliary condition during the optimisation.

**5.** Method as claimed in one of claims 1 to 4, **characterised in that** a method of sequential quadratic optimisation, e.g. Schittkowski's method, is used as the optimisation algorithm.

**6.** Method as claimed in one of claims 1 to 5, **characterised in that** if the mathematical optimisation can not be solved under pre-set auxiliary conditions, the solution computed is one which least contravenes the auxiliary conditions, in particular the auxiliary conditions based on threshold values.

**7.** Method as claimed in claim 6, **characterised in that** the auxiliary conditions to be specified are placed in a sequence of priorities and/or alternative auxiliary conditions are pre-set.

**8.** Method as claimed in one of claims 1 to 7, **characterised in that** the optimisation is run off-line to compute pass schedules for rolling processes to be run at a subsequent point in time.

**9.** Method as claimed in one of claims 1 to 7, **characterised in that** the optimisation is run on-line directly before and/or during the rolling process and the results of the optimisation are used to control the rolling process.

**10.** Method as claimed in one of claims 1 to 9, **characterised in that** a pass schedule with similar characteristics is used as an initial solution for the optimisation.

## Revendications

**1.** Procédé de calcul d'un patron de réduction pour un train de laminage, à l'aide de modèles mathématiques d'un processus de laminage, **caractérisé en ce que** l'on forme une fonction cible, soumise, en impliquant au moins un modèle mathématique en tant que contrainte, à une optimisation mathématique, tel que, par exemple, une formation de valeur extrême, et les valeurs fonctionnelles, déterminées de cette manière, de la fonction cible sont utilisées pour élaborer un patron de passe de réduction.

**2.** Procédé selon la revendication 1, **caractérisé en ce que** la fonction cible est une fonction de variables d'état du produit laminé, telles que la vitesse v, l'épaisseur h, la température T, le profil relatif r, et/ou des variables de contrôle, tel que la vitesse périphérique $V_R$, la force de laminage F, la force de flexion $F_B$.

**3.** Procédé selon l'une des revendications 1 à 2, **caractérisé en ce qu'**au moins une condition, imposée sous la forme d'une valeur limite, au patron de passe de réduction est prise en compte en tant que contrainte lors de l'optimisation.

**4.** Procédé selon l'une des revendications 1 à 3, **caractérisé en ce qu'**au moins une condition indiquant une valeur fixée pour une variable de contrôle ou d'état est prise en compte en tant que contrainte lors de l'optimisation.

**5.** Procédé selon l'une des revendications 1 à 4, **caractérisé en ce qu'**on utilise comme algorithme d'optimisation un procédé d'optimisation quadratique séquentiel, par exemple le procédé de Schittkowski.

**6.** Procédé selon l'une des revendications 1 à 8,
**caractérisé en ce que**, dans le cas d'insolubilité de l'optimisation mathématique sous des contraintes prédéterminées, la solution impliquant la violation minimale des contraintes, en particulier des contraintes se référant à une valeur limite, est calculée.

**7.** Procédé selon la revendication 5, **caractérisé en ce que** l'on prédétermine un ordre de succession de priorités des contraintes à indiquer et/ou des contraintes prises en alternatives.

**8.** Procédé selon l'une des revendications 1 à 7, **caractérisé en ce que** l'optimisation est effectuée off-line pour le calcul de patron de réduction, pour des processus de laminage temporellement successifs.

**9.** Procédé selon l'une des revendications 1 à 7, **caractérisé en ce que** l'optimisation est effectuée on-line, directement avant et/ou pendant le processus de laminage, et les résultats de l'optimisation sont utilisés pour la commande du processus de laminage.

**10.** Procédé selon l'une des revendications 1 à 9, **caractérisé en ce que** l'on utilise une solution initiale pour optimiser un patron de réduction, ayant une caractéristique analogue.